# DEMANDE DE BREVET EUROPEEN

(11) **EP 1 489 538 A1**
(43) Date de publication de la demande: **22.12.2004**
(21) Numéro de dépôt: 03447159.9
(22) Date de dépôt: 20.06.2003
(51) Int. Cl.: G06F 17/60

(54) **Procédé de traçabilité de produits alimentaires**

(71) Demandeur: BIVtrace, 5060 Falisolle (Sambreville) (BE)
(72) Inventeur: Brigode, Christian, 5060 Falisolle (BE)
(74) Mandataire: Van Malderen, Joelle

(57) **Abrégé**

La présente invention se rapporte à un procédé de traçabilité d'animaux et/ou de produits alimentaires (éventuellement issus de ces animaux) au sein d'une filière agroalimentaire, comprenant les étapes suivantes :
- identification par un code unique entreprise des différentes entreprises (1) de ladite filière agroalimentaire
- intégration au sein d'une base de données de traçabilité (2) pour chaque entreprise d'une filière, un code unique objet attaché à chaque lot d'animaux et/ou de produits alimentaires sortant de l'entreprise ou entrant dans l'entreprise, les codes uniques objets attachés aux lots d'animaux et/ou aux lots de produits alimentaires étant transmis par des moyens de télécommunication à la base de données par chaque entreprise par une étape de validation identifiant l'entreprise et chaque lot d'animaux et/ou de produits alimentaires entrant dans l'entreprise et par une étape de clôture lors de l'expédition d'un lot d'animaux et/ou de produits alimentaires sortant de l'entreprise vers une autre entreprise de la même filière.

## Description

### Objet de l'invention

La présente invention est relative à un procédé de traçabilité d'animaux et de produits alimentaires d'origine végétale (céréales, fruits, jus de fruits, épices,...), animale (viande, oeufs, lait ou fromage et éventuellement les éléments non alimentaires tels que le cuir, la laine,...) ou minérale (sel, oligoéléments, colorants,...) .

### Arrière-plan technologique et état de la technique à la base de l'invention

Suite à l'industrialisation des procédés d'élevage d'animaux et de la production des produits alimentaires, de nombreuses contaminations des animaux et des produits alimentaires ont été détectées trop tard et des lots de produits n'ont pu être bloqués à temps par les autorités.

Par conséquent, il existe un besoin urgent d'obtenir un procédé et des outils de traçabilité efficace des animaux et/ou des produits alimentaires par les entreprises et les autorités gouvernementales, sans modifier les procédés et outils de gestion actuellement utilisés par ces entreprises ou ces autorités.

Au sens du Règlement (CE) n° 178, la traçabilité est définie comme « *la capacité* de *retracer, à travers toutes les étapes* de *la production, de la* *transformation et de la distribution, le cheminement d'une denrée alimentaire, d'un aliment pour animaux, d'un animal producteur de denrées alimentaires ou d'une substance destinée à être incorporée ou susceptible d'être incorporée dans une denrée alimentaire humaine ou un aliment pour animaux* ».

En d'autres termes, la traçabilité vu sous son aspect microéconomique (en entreprise) est la capacité de retracer, à travers toutes les étapes depuis la réception des matières premières jusqu'à l'expédition des produits finis chez les clients, le cheminement d'une denrée ou produit alimentaire.

Cependant, à ce jour, il n'existe pas de mise en oeuvre simple, peu coûteuse et surtout efficace de cette traçabilité, de manière à éviter toute contamination supplémentaire d'animaux, des produits alimentaires ou des consommateurs au sein d'une entreprise ou d'une filière.

La présente invention vise à fournir un procédé et des moyens répondant à ce but.

### Eléments caractéristiques de l'invention

La présente invention concerne l'objet des revendications annexées.

La présente invention sera décrite de manière plus détaillée dans la description d'une forme d'exécution préférée de l'invention présentée ci-dessus, en référence aux figures annexées.

### Description d'une forme d'exécution préférée de l'invention

Le procédé de traçabilité de l'invention est en mesure de :
- identifier tous les animaux ou toutes les produits alimentaires entrant ou sortant d'une entreprise ;
- localiser tant en externe qu'en interne ces animaux ou ces produits alimentaires (y compris les produits alimentaires issus de ces animaux tels que la viande, les abats d'animaux, le lait, les oeufs ou les produits végétaux, animaux ou minéraux utilisés dans la préparation de ces produits alimentaires) ainsi que les mélanges de produits alimentaires et les liens existant entre ces produits et :

- retracer, c'est-à-dire faire l'historique desdits animaux ou desdits produits alimentaires au sein de l'entreprise.

Cette traçabilité se fait par une identification de chaque produit, tant au niveau de l'entrée des matières premières, qu'au niveau de la production, de la transformation et de l'expédition des produits finis (c'est-à-dire des produits transformés) par une entreprise donnée.

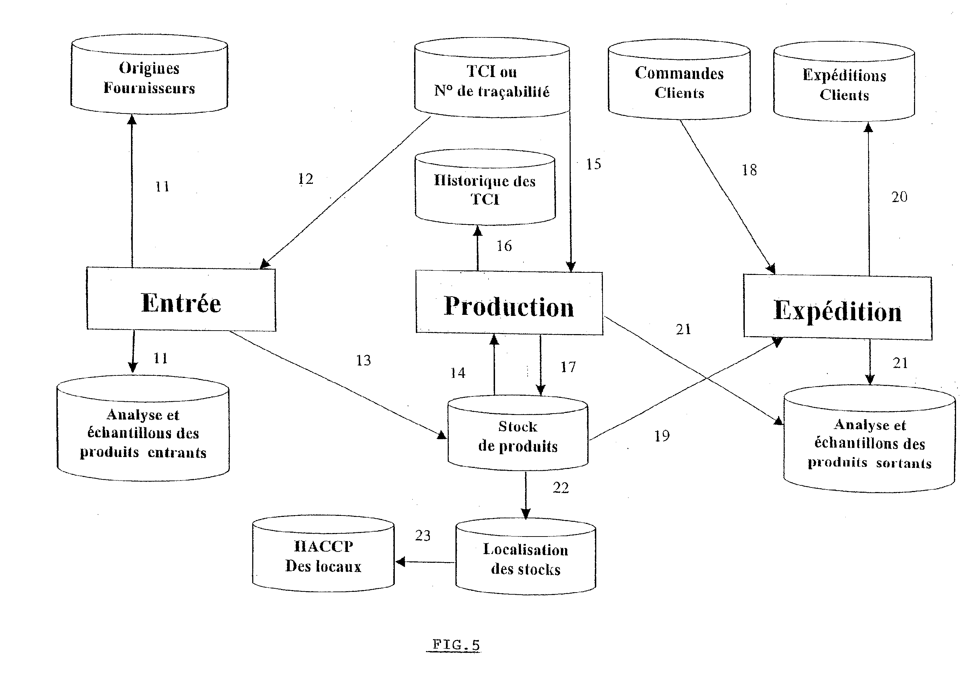

Cette identification peut se faire au niveau de certaines unités de traitement spécifique (entrée, conservation, expédition) et/ou de zones de traitement des produits intermédiaires durant la production (voir figure 5) .

Cette traçabilité permet l'intégration également de certaines données de type H.A.C.C.P (Hazard Analysis Critical Control Point), en particulier les contrôles microbiologiques sur des échantillons de matières premières, les contrôles microbiologiques de l'efficacité des procédures de nettoyage et de désinfection, etc..

Cette traçabilité peut s'appliquer par un marquage des produits vivants (animaux), des produits végétaus, des produits dérivés de ces animaux (viande, oeufs), ainsi que des différents emballages ou containers comprenant ces dits produits.

L'identification de ces différents produits pouvant être faite par des systèmes connus en soi par utilisation d'un code unique objet (code barre, puce électronique, hologramme, marquage biologique,...).

De même, des locaux d'entrée, de sortie et de production sont également identifiés au moyen d'un code unique lieu. C'est cette double identification des locaux et des produits ou des divers contenants (emballages ou récipients des produits alimentaires, des chariots transportant ces récipients, des cages comprenant les animaux, etc) qui permet la mise en oeuvre d'une traçabilité géographique qui allie l'identification et la localisation des produits au sein d'une entreprise ou d'un lieu de production. De plus, la simple lecture du code unique produit présent sur un emballage, sur une cage, sur un container ou sur un moyen de transport permet éventuellement d'identifier le contenant (produit vivant ou produit alimentaire).

De plus, le marquage par un code unique lieu ou objet des différents locaux, récipients et moyens de transport et leur double intégration dans une base de données facilitent la gestion de qualité (respect de recettes de préparation des produits alimentaires, suivi des produits,...) et l'inventaire en production ou en fin de production.

Le système de traçabilité peut également être adapté pour fournir des données, telle que la prise de la date et de l'heure d'entrée d'une matière première ou d'expédition d'un produit fini ou le passage de différents éléments par différentes unités de production.

L'incorporation de ces différentes données validées par un lecteur connecté à la base de données d'un ordinateur permet également de caractériser la progression de la production (suivi des mélanges des produits, traitement des produits) et du stockage et facilite également la logistique et la gestion de qualité (date de péremption, suivi des étapes de production, contrôle de la productivité).

Le système de traçabilité de l'invention permet donc également de visualiser avantageusement les quantités de produits présents dans un container ou sur un moyen de transport et d'optimaliser la logistique et le transfert des produits.

De plus, cette traçabilité au sein d'une entreprise peut être avantageusement intégrée ou non dans une traçabilité d'une filière alimentaire intégrant à la fois des produits destinés à l'alimentation des animaux, l'élevage desdits animaux et éventuellement l'obtention de produits dérivés de ces animaux (cuir, lait, oeufs, ...), le transport desdits animaux ou de ces produits dérivés, le traitement de ces animaux (abattage, insémination, traitement thérapeutique, ...), le traitement appliqué (thermique, chimique, biologique, ...) sur des produits dérivés de ces animaux, la préparation de produits alimentaires complexes comprenant un ou plusieurs de ces dérivés des produits animaux, les étapes de récupération, de traitement des déchets d'abattage et de production, la transformation de ces déchets d'abattage en produits alimentaires, le mélange de produits alimentaires, ....

Cette traçabilité d'une chaîne alimentaire peut être présente au sein d'une même entreprise, de différentes filiales d'une même entreprise ou d'entreprises différentes appartenant à un ou plusieurs secteurs agro-alimentaires. La gestion de la traçabilité de ces différentes données peut être avantageusement effectuée ou contrôlée par des organismes nationaux ou supra-nationaux, en particulier dans le cas où ces produits ou animaux traversent les frontières.

En effet, les autorités et les filières ont besoin d'informations centralisées pour gérer et localiser rapidement et correctement les accidents générant des lots de produits alimentaires ou d'animaux potentiellement dangereux pour les éleveurs ou les consommateurs.

Dans ce cas, toutes les entreprises(1) d'une filière (petites, moyennes ou grandes) doivent être inventoriées et identifiées par un numéro unique entreprise (numéro national ou numéro européen) dans une base de données de traçabilité (2).

De plus, l'intégration des établissements de production, de transformation, ainsi que ceux de la distribution dans un projet de traçabilité de filières alimentaires assure ainsi une couverture intégrale du circuit allant du producteur vers la distribution, dernier maillon de la chaîne avant le consommateur final.

Dans ce cas, tous les types de circuits de production et de distribution doivent être identifiés et localisés. La traçabilité des produits et des données d'un acteur à l'autre de ces circuits de distribution et de production est assurée via la création d'une base de données centrale (2); cette base étant gérée par une institution gouvernementale (nationale ou supra-nationale) ou une autre organisation gérée par la filière (autocontrôle).

Pour assurer le dialogue entre les entreprises (1) de la filière et cette base de données centrale (2), des outils informatiques (identification et validation de l'identification des produits d'entrée et de sortie et de l'entreprise) et des moyens de télécommunication sont utilisés. Grâce à ces moyens d'identification dans une filière, l'autorité peut intervenir rapidement en cas de crise pour identifier les produits incriminés et prendre les mesures nécessaires pour assurer le blocage éventuel de ces produits au niveau d'une chaîne de production ou de distribution.

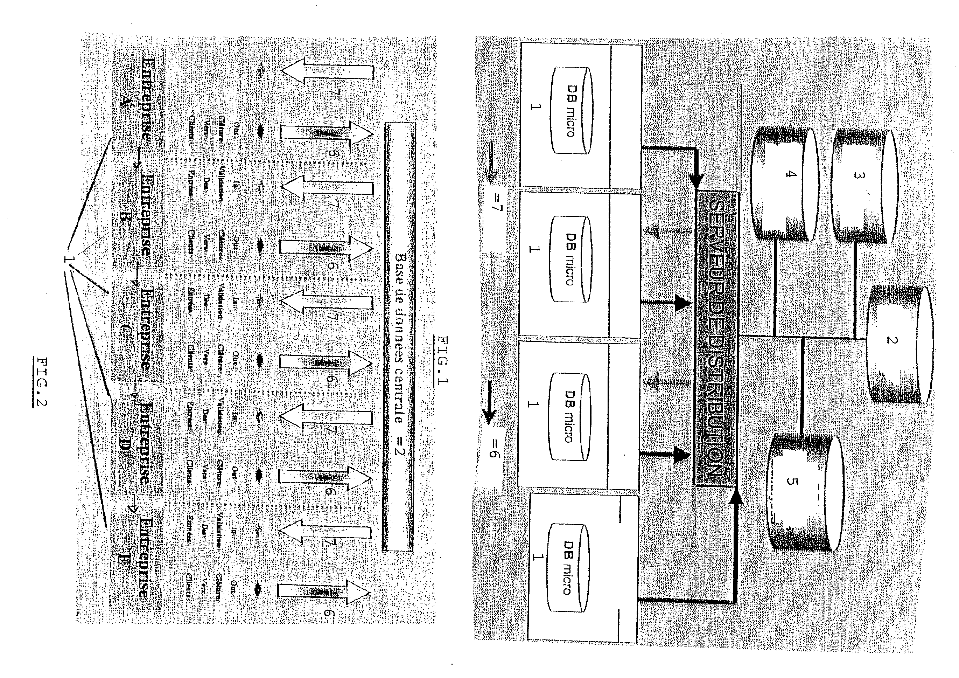

Des connections de cette base de données avec les données de systèmes de classification (3), de certification (4) et des laboratoires d'analyses(5) peuvent être également présentées afin de qualifier ces produits (animaux ou produits alimentaires) (fig. 1).

Pour assurer une efficacité optimale de la traçabilité au sein d'une filière alimentaire, il est nécessaire d'effectuer pour chaque prestation d'entrée et de sortie de produits dans une entreprise (1) ou une unité d'une entreprise, une opération de validation et une opération de clôture pour chaque produit (animal ou produit alimentaire).

L'étape ou opération de validation (6) est effectuée à la réception de matières premières ou avant l'utilisation de produits en stock, chaque entreprise (1) questionnant la base de données centrale (2) (la base de données gouvernementale attachée à une filière), et éventuellement la base de données présente au sein de l'entreprise pour la traçabilité des produits, pour permettre une validation sanitaire des produits qui entreront dans une chaîne de production.

Ensuite, une étape ou opération de clôture (7) est effectuée lorsque la production (produits finis à réutiliser ou à expédier) est finie ou en fin de journée, l'entreprise (1) envoyant vers la base de données centrale (2) les liens entre le code de l'entreprise et les codes uniques objet des produits (matières premières) validés et utilisés et les codes uniques objet attribués à des produits (éventuellement issus de mélanges de produits) fabriqués à partir desdites matières premières (clôture) (fig.2).

Le principe de cette opération de validation est d'alimenter la base de données centrale (en informations et en liens entre entreprises (1) et produits) et de permettre aisément d'identifier ces produits et ces entreprises et d'assurer une traçabilité ascendante et descendante (fig.3). Cette traçabilité ascendante ou « tracing » permet à toutes les étapes de retrouver l'historique et l'origine d'un animal, d'un produit alimentaire donné ou d'un lot de produits alimentaires sur base d'un ou de plusieurs critères (code produit, code entreprise, liens entre entreprises, liens entre produits, ...) .

La traçabilité descendante ou « tracking » consiste à retrouver la localisation industrielle ou commerciale à toutes les étapes d'un lot de produits à partir de ces critères donnés.

La traçabilité descendante sert notamment en cas de rappel, de retrait ou de blocage des produits (animaux vivants ou produits alimentaires).

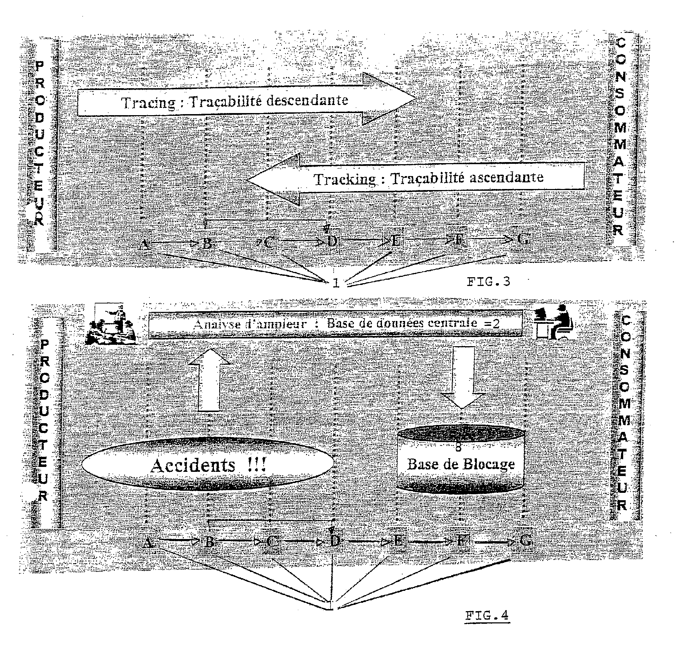

En cas de crise alimentaire, au sein de la base de données (2), on intègre au procédé un lien avec une base de blocage (8), de manière à empêcher toute validation par une entreprise (1) d'une matière première dangereuse vers une chaîne de production (expédition) et empêcher que cette matière première dangereuse (contaminée, périmée, volée, ...) puisse être mise en contact avec d'autres produits ou acteurs (personnel, animaux, consommateurs) dans l'entreprise ou dans la filière (fig.4).

Cette base de données de blocage (8) permet d'assurer de manière certaine que des produits incriminés dangereux ou suspects d'être dangereux par leur nature, leur localisation ou leur détention puissent contaminer d'autres produits ou acteurs du circuit de production ou de distribution.

En outre, au niveau d'une base de données centrale (2), il est possible d'effectuer une analyse d'ampleur (liens entre produits, liens entre entreprises d'une filière) de manière à bloquer des animaux ou produits alimentaires et d'établir jusqu'à quel stade différents acteurs (entreprise, distributeur, consommateur) ont pu être en contact avec ces produits et assurer ainsi un niveau de protection sanitaire suffisant. Ainsi, lors de l'étape de la validation (6), c'est-à-dire avant l'entrée des matières premières dans une entreprise et avant l'utilisation de produits en stock, le ou les produits incriminés seront identifiés grâce à l'interrogation de la base de données (2). L'entreprise (1) effectuant cette validation (6) ne devra pas effectuer d'analyses complémentaires ; simplement, lorsque certains de ces produits de matières premières ou produits semi-finis, seront identifiés comme mauvais ou suspects, il doit les mettre à l'écart (ne pas les intégrer dans la production de produits finis) et/ou suivre les recommandations d'utilisation de ces produits donnés par l'institution gouvernementale responsable de la base de données centrale(2).

Des systèmes similaires pourront être éventuellement intégrés au sein d'une seule unité de production en fonction des besoins de la direction ou de la gestion de qualité d'une entreprise. Les produits mis à l'écart pourront être détruits ou saisis par des agents gouvernementaux compétents.

### Brève description des figures

La figure 1 représente l'organigramme d'une traçabilité macro-économique d'une filière de production alimentaire.

La figure 2 représente les liens entre les différentes entreprises et la base de données centrale.

La figure 3 représente les différentes possibilités de traçabilité descendante et ascendante entre différentes entreprises au sein d'une même filière de production alimentaire.

La figure 4 représente les dispositifs de blocage d'animaux ou de produits alimentaires au sein d'une filière de production alimentaire.

La figure 5 représente un organigramme simplifié d'une traçabilité au sein d'une entreprise.

### Exemple de fichier de validation

| R1 5499950467103 VI 20030315-2 : identificatin GLN | |
|---|---|
| **Lot** | **Références** |
| R2 | 7145892 |
| R2 | 568478 |
| R2 | 147852 |
| R2 | 258963 |
| R2 | 456987 |
| R2 | 5842 |
| R2 | 781359 |
| R2 | 48652 |
| R2 | 782491 |
| R9 | 5499950467103 |
| | VI 20030315-2 9 |

### Exemple de fichier de réponse à une demande de validation

| R1 5499950467103 VO 20030315-2 : identification GLN | | |
|---|---|---|
| Lot | Références | Valeur |
| R2 | 7145892 | 1 |
| R2 | 258963 | 2 |
| R2 | 5842 | 2 |
| R9 | 5499950467103 | VO 20030315-2 3 |

**La validation est faite par exception.**

Seuls, les lots connus et bloqués ou les lots inconnus sont renvoyés à l'entreprise demandant une validation.
Le statut renvoyé porte la valeur
1 pour lot connu et bloqué
2 pour lot inconnu

Si tout est connu, l'utilisateur reçoit un fichier contenant un record R1 et un record R9 (nombre de record=0).

### Exemple de traçabilité de produits au sein d'une entreprise par intégration de codes produits et codes lieux

La figure 5 représente la traçabilité au sein de locaux d'entrée, de locaux de production et de locaux d'expédition d'une entreprise, chacun de ces locaux pouvant être identifié par un code unique lieu.

### Gestion des entrées

Mémorisation des informations fournisseurs relatives à la sécurité alimentaire (1)
Attribution d'un code de lot interne à l'entreprise - IDENTIFICATION (12)
Mise en stock des produits entrants (13)

### Gestion de la production

Prélèvement de stock suivant les recettes des produits à fabriquer (14)
Attribution d'un code de lot aux produits fabriqués (15)
Mémorisation des liens entre les produits prélevés et les produits fabriqués (16)
Stockage des produits fabriqués (17)

### Gestion de l'expédition

Préparation des commandes clients par lecture des étiquettes des lots de produits livrés (18) PICKING
Mémorisation des sorties de stock (19)
Mémorisation des relations entre les produits livrés et clients réceptionnés (20)
Mémorisation des données de sécurité alimentaire relatives aux produits fabriqués et/ou livrés (21)

### Gestion des locaux de stockage

Mémorisation des lieux de stockage des produits présents dans l'entreprise (22)
Mémorisation des données de sécurité alimentaire relatives aux locaux de stockage (23)

## Revendications

1. Procédé de traçabilité d'animaux et/ou de produits alimentaires (éventuellement issus de ces animaux) au sein d'une filière agroalimentaire, comprenant les étapes suivantes :
- identification par un code unique entreprise des différentes entreprises (1) de ladite filière agroalimentaire
- intégration au sein d'une base de données de traçabilité (2) pour chaque entreprise d'une filière, un code unique objet attaché à chaque lot d'animaux et/ou de produits alimentaires sortant de l'entreprise ou entrant dans l'entreprise, les codes uniques objets attachés aux lots d'animaux et/ou aux lots de produits alimentaires étant transmis par des moyens de télécommunication à la base de données par chaque entreprise par une étape de validation identifiant l'entreprise et chaque lot d'animaux et/ou de produits alimentaires entrant dans l'entreprise et par une étape de clôture lors de l'expédition d'un lot d'animaux et/ou de produits alimentaires sortant de l'entreprise vers une autre entreprise de la même filière.

2. Procédé selon la revendication 1, **caractérisé en ce que** les produits alimentaires sont des produits finis issus de la transformation de produits (matières premières) ou sont la résultante d'un mélange de plusieurs produits alimentaires, chacun de ces produits étant identifiable avant et après transformation ou mélange par un code unique objet et **en ce que** la base de données intègre également les liens entre les différents produits.

3. Procédé selon la revendication 1 ou 2, **caractérisé en ce que** la base de données (2) est liée à une base de données de blocage identifiant un ou plusieurs lots d'animaux et/ou de produits alimentaires dangereux au sein d'une filière.

4. Procédé selon la revendication 3, **caractérisé en ce que** l'on identifie au niveau d'une base de données de blocage les produits dangereux pour une filière alimentaire et **en ce que** l'on attribue à ces produits un code unique objet spécifique empêchant la validation et l'entrée au sein d'une entreprise de ces animaux ou produits alimentaires avant leur éventuelle destruction ou saisie.

5. Procédé selon l'une quelconque des revendications précédentes, caractérisé en ce le code unique objet et éventuellement le code unique entreprise est marqué sur les animaux, les produits alimentaires, les contenants et/ou les emballages desdits animaux ou produits alimentaires.

6. Procédé selon la revendication 5, **caractérisé en ce que** ce dit marquage par code unique objet est un marquage par barre code ou puce électronique.
